# EUROPEAN PATENT APPLICATION

(11) **EP 4 749 768 A1**
(43) Date of publication of application: **27.05.2026**
(21) Application number: 25207050.3
(22) Date of filing: 06.10.2025
(51) Int. Cl.: H01M 10/613, H01M 10/647, H01M 10/6556, H01M 50/209, H01M 50/30, H01M 50/358, H01M 50/367, H01M 50/55

(54) **BATTERY MODULE**

(30) Priority: 20.11.2024 KR 20240166406
(71) Applicant: SAMSUNG SDI CO., LTD., Yongin-si, Gyeonggi-do 17084 (KR)
(72) Inventor: KIM, Hyun, 17084 Yongin-si (KR); YOO, Jaehyun, 17084 Yongin-si (KR)
(74) Representative: Marks & Clerk LLP

(57) **Abstract**

A battery module includes: a plurality of battery cells each comprising a terminal part on one side of the corresponding battery cell, and a vent at an opposite side to the one side; and a cooling plate comprising a cooling passage extending in a direction in which the plurality of battery cells are located, wherein the cooling plate comprises a vent gas passage arranged to correspond to the vents of the plurality of battery cells.

## Description

### BACKGROUND

### 1. Field

Aspects of some embodiments according to the present disclosure relate to a battery module.

### 2. Description of the Related Art

A secondary battery is designed to be charged and discharged without damaging the secondary battery, unlike a primary battery which is not designed to be charged. Low-capacity secondary batteries may be used in portable small-sized electronic devices, such as smartphones, feature phones, laptop computers, digital cameras, and camcorders, while high-capacity secondary batteries may be used as energy sources for driving motors in hybrid vehicles, electric vehicles, and the like, and a battery for power storage. Such a secondary battery includes an electrode assembly having a positive electrode and a negative electrode, a case housing the electrode assembly, electrode terminals connected to the electrode assembly, and the like.

The above information disclosed in this Background section is only for enhancement of understanding of the background and therefore the information discussed in this Background section does not necessarily constitute prior art.

### SUMMARY

Aspects of some embodiments include a battery module with relatively improved stability and durability.

However, aspects of some embodiments of the present disclosure are not restricted to those set forth herein. The other embodiments of the disclosure will become more apparent to one of ordinary skill in the art to which the disclosure pertains by referencing the detailed description of the disclosure given below.

According to one or more embodiments of the present disclosure, a battery module includes a plurality of battery cells each including a terminal part on one side of the corresponding battery cell and a vent at an opposite side to the one side, and a cooling plate including a cooling passage extending in a direction in which the plurality of battery cells are arranged, wherein the cooling plate includes a vent gas passage arranged to correspond to the vents of the plurality of battery cells.

According to some embodiments, the cooling plate may include a main surface arranged to correspond to surfaces, at which the vents are formed, of the plurality of battery cells, and wing surfaces bent and extending from the main surface to correspond to outer surfaces of the plurality of battery cells.

According to some embodiments, the battery module may further include a thermal interface material (TIM) layer arranged between the plurality of battery cells and the cooling plate.

According to some embodiments, the TIM layer may include a shape open to correspond to (i.e. to avoid interfering with, or to leave a gap or space for) the respective vents.

According to some embodiments, the cooling plate may include a stopper arranged between the pair of adjacent battery cells.

According to some embodiments, the stopper may be detachably fastened to the cooling plate.

According to some embodiments, the stopper may have an area of 2% to 30% of each of opposing surfaces between the battery cells, i.e. % to 30% of the whole areas of a corresponding one of the opposing surfaces.

According to some embodiments, the stopper may include a material having a different thermal conductivity from that of the cooling plate.

According to some embodiments, the cooling plate may include openings corresponding to the respective vents, and may further include blocking layers configured to block the openings.

According to some embodiments, a blocking layer may melt at least in part in case that that blocking layer reaches at least a certain temperature due to ignition or heat generation of the battery cell. In some embodiments, all the blocking layers are configured to melt at least in part based on the respective blocking layer reaching at least a certain temperature due to ignition or heat generation of a battery cell from among the battery cells, such that the respective one can so melt in that circumstance.

According to some embodiments of the present disclosure, a battery module includes a plurality of battery cells each including a terminal part on one side of the corresponding battery cell and a vent at an opposite side to the one side, and a cooling plate including a cooling passage extending in a direction in which the plurality of battery cells are arranged, wherein the cooling plate includes a stopper arranged between adjacent battery cells of the battery cells.

According to some embodiments, the cooling plate may include a main surface arranged to correspond to surfaces, at which the vents are formed, of the plurality of battery cells, and wing surfaces bent and extending from the main surface to correspond to outer surfaces of the plurality of battery cells.

According to some embodiments, the battery module may further include a thermal interface material (TIM) layer arranged between the plurality of battery cells and the cooling plate.

According to some embodiments, the TIM layer may include a shape open to correspond to (i.e. to avoid interfering with, or to leave a gap or space for) the respective vents.

According to some embodiments, the cooling plate may further include a vent gas passage arranged to correspond to the vents of the plurality of battery cells.

According to some embodiments, the stopper may be detachably fastened to the cooling plate.

According to some embodiments, the stopper may have an area of 2% to 30% of each of opposing surfaces between the battery cells, i.e. % to 30% of the whole areas of a corresponding one of the opposing surfaces.

According to some embodiments, the stopper may include a material having a different thermal conductivity from that of the cooling plate.

According to some embodiments, the cooling plate may include openings corresponding to the respective vents, and may further include blocking layers configured to block the openings.

According to some embodiments, a blocking layer may melt at least in part in case that that blocking layer reaches at least a certain temperature due to ignition or heat generation of the battery cell. In some embodiments, all the blocking layers are configured to melt at least in part based on the respective blocking layer reaching at least a certain temperature due to ignition or heat generation of a battery cell from among the battery cells, such that the respective one can so melt in that circumstance.

At least some of the above and other features of the invention are set out in the claims.

### BRIEF DESCRIPTION OF THE DRAWINGS

The following drawings attached to this specification illustrate aspects of some embodiments of the present disclosure and, together with the detailed description of the disclosure described below, serve to further understand the technical idea of the disclosure; therefore, the disclosure should not be interpreted as being limited to matters described in such drawings in which:
FIG. 1 is a schematic perspective view of an example of a battery module according to some embodiments;
FIG. 2 is a schematic exploded perspective view of the example of the battery module according to some embodiments;
FIG. 3 is a schematic perspective view of an example of a battery cell of the battery module of FIG. 2;
FIG. 4 is a schematic perspective view of an example of a cooling plate according to the disclosure;
FIG. 5 is a schematic perspective view showing an example of a cross-section of a battery module according to some embodiments of the present disclosure;
FIG. 6 is a schematic perspective view of an example of a stopper according to some embodiments; and
FIG. 7 is a schematic perspective view of another example of a stopper according to some embodiments.

### DETAILED DESCRIPTION

Hereinafter, aspects of some embodiments of the present disclosure will be described in detail with reference to the attached drawings. Prior to this, terms or words used in this specification and claims should not be interpreted as being limited to their usual or dictionary meanings, and should be interpreted with meanings and as concepts that conform to the technical idea of the disclosure based on the principle that the inventor may appropriately define the concept of the term in order to explain his or her own invention in the best way. Therefore, the embodiments described in this specification and the configurations illustrated in the drawings are only some embodiments of the disclosure and do not represent all of the technical ideas of the disclosure, and it should be understood that there may be various equivalents and modified examples that may replace those embodiments at the time of filing this application.

Additionally, the terms "comprise or include" and/or "comprising or including" as used herein specify the presence of stated features, numbers, steps, operations, members, elements, and/or groups thereof, but do not preclude the presence or addition of one or more other features, numbers, operations, members, elements, and/or groups thereof.

Additionally, to help understanding of the disclosure, the accompanying drawings are not drawn to scale, but the dimensions of some components may be exaggerated. Furthermore, the same element in different embodiments may be given the same reference number.

Although the terms first, second, and the like may be used herein to describe various components, these components are not limited by these terms. These terms are used only to distinguish one component from another, and unless otherwise stated, it is of course the case that a first component may also be a second component.

Throughout the specification, unless otherwise stated, each component may be singular or plural.

Any configuration being placed "above (or below)" a component or "on (or under)" a component may mean not only that any configuration is placed in contact with the upper surface (or lower surface) of a component, but also that other configurations may be interposed between the component and any configuration placed on (or below) the component.

Further, when one component is described as being "connected", "coupled", or "connected" to another component, the components can be directly connected or able to be connected to the other component; however, it is also to be understood that an additional component can be "interposed" between the two components, or the two components can be "connected", "coupled" or "connected" through an additional component. Also, when it is said that a part is electrically coupled to another part, this includes not only cases where they are directly connected, but also cases where they are connected with another element in between.

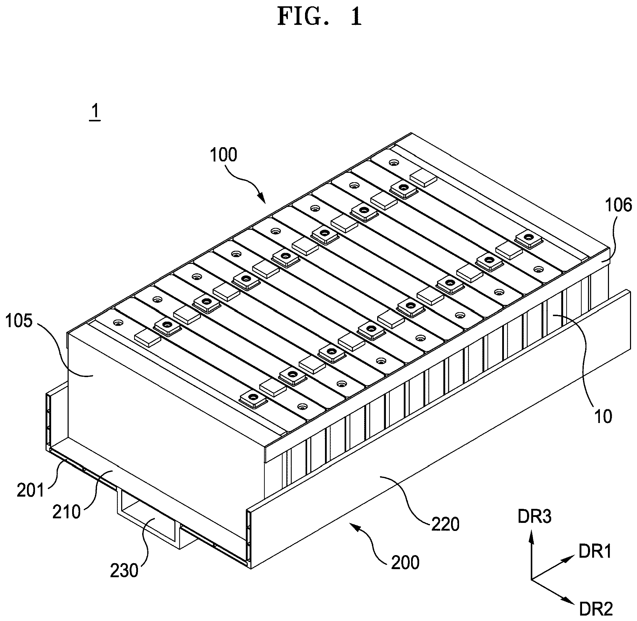

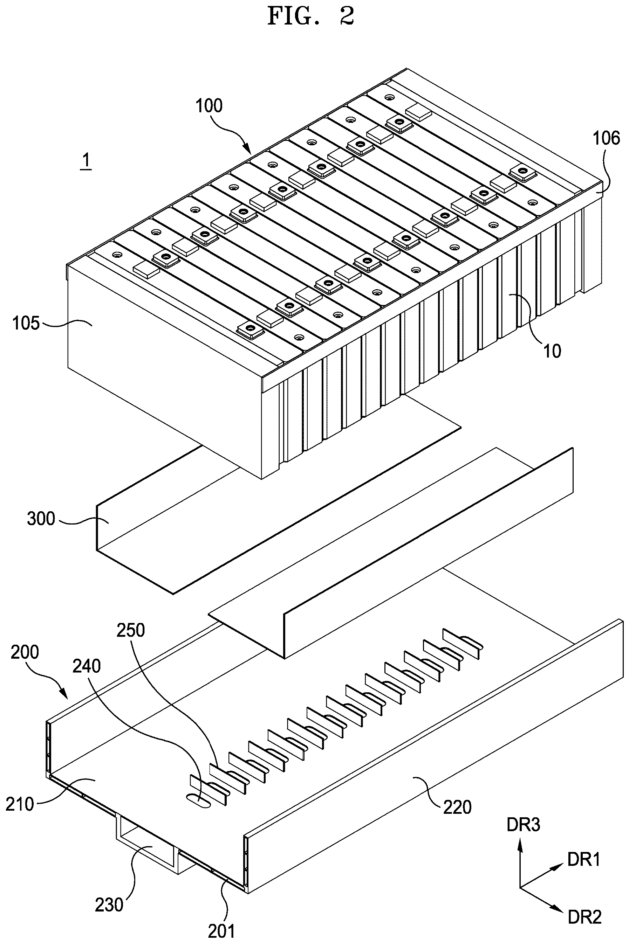

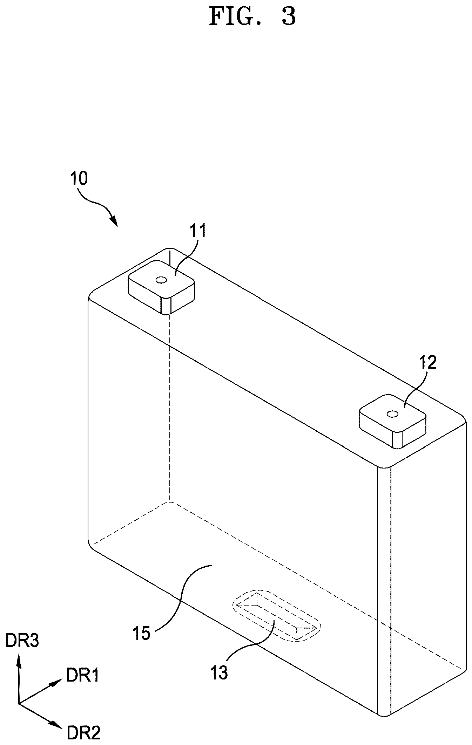

FIG. 1 is a schematic perspective view of an example of a battery module 1 according to some embodiments, and FIG. 2 is a schematic exploded perspective view of an example of the battery module 1 according to some embodiments. Also, FIG. 3 is a schematic perspective view of an example of a battery cell 10 of the battery module 1 of FIG. 2.

Referring to FIGS. 1 and 2, a battery module 1 according to some embodiments may include a cell unit 100 including a plurality of battery cells 10, and a cooling plate 200 having at least one surface arranged adjacent to the plurality of battery cells 10.

The plurality of battery cells 10 may be arranged in one direction DR1 so that wide surfaces of the battery cells 10 oppose each other, and may form a cell unit 100 which is a set of the plurality of battery cells 10 arranged in one row. The plurality of battery cells 10 arranged may be fixed by a housing.

The housing may include a pair of end plates 105 which oppose the wide surfaces of the battery cells 10, and side plates 106 connecting the pair of end plates 105. The end plate 105 may appropriately pressurize the opposite wide surface of the or each battery cell 10, directly or indirectly through the cell unit, to suppress volume expansion of the battery cell 10 upon an occurrence of swelling of the battery cell 10, thereby suppressing or reducing performance degradation of the battery cell 10. The side plate 106 may support side surfaces of the battery cells 10. The pair of end plates 105 and side plates 106 may be connected by members, such as bolts, but are not limited thereto, and any method that may be used for fastening may be adopted.

Referring to FIG. 3, the battery cell 10 may include a terminal part 11, 12 including a first terminal 11 and a second terminal 12, and may also include a battery case 15 and an electrode assembly and electrolyte housed inside the battery case 15. The electrode assembly may electrochemically react with the electrolyte to generate energy.

The terminal part 11, 12 electrically connected to a connection tab may be arranged on one side of the battery cell 10. The terminal part 11, 12 of the battery cell 10 may include a first terminal 11 and a second terminal 12 having different polarities. For example, in case that the first terminal 11 is a positive terminal, the second terminal 12 may be a negative terminal, and in another example, in case that the first terminal 11 is a negative terminal, the second terminal 12 may be a positive terminal. That is, the first terminal 11 and the second terminal 12 may be formed electrically different in polarity, and may not be limited to specific polarities.

The terminal parts 11, 12 of the adjacent battery cells 10 may be electrically connected in series and/or in parallel. For example, the first terminal 11 of one battery cell 10 may be electrically connected to the second terminal 12 of another adjacent battery cell 10, and the second terminal 12 of the one battery cell 10 may be electrically connected to the first terminal 11 of still another adjacent battery cell 10.

The description has been given as an example of a serial connection in FIG. 1, but the connection structure is not limited to the serial structure, and various connection structures may be adopted as needed. Additionally, the number and arrangement of battery cells 10 are not limited to the structure illustrated in FIG. 1 and may vary as needed.

According to some embodiments, a vent 13, which is an outlet for gas generated inside the battery cell 10, may be formed at another side of the battery cell 10.

As the temperature of one battery cell 10 rises, a protective layer (SEI layer) of a negative electrode of the battery cell 10 may be decomposed and destroyed, and thereby the electrolyte inside the battery cell 10 may be thermally decomposed, thereby generating flammable gas. Furthermore, oxygen may be generated due to the decomposition of oxide of a positive electrode in the battery cell 10. Due to the generation of all three elements of fire, i.e., heat, fuel (flammable gas), and oxygen, thermal runaway may occur in the battery cell 10. In case that the thermal runaway occurs in the battery cell 10, the thermal runaway may spread to other adjacent battery cells 10 due to heat generation and explosion.

The vent 13 may be arranged at the side different from the one side where the terminal part 11, 12 of the battery cell 10 is located. Accordingly, the terminal parts 11, 12 of the battery cells 10 may be suppressed from being damaged in the process of discharging, through the vent 13, vent gas and other substances generated in the battery cell 10 when the thermal runaway has occurred.

In case that the battery module 1 disclosed herein is used in an electric vehicle, vent gas and other substances of the battery cell 10 may be discharged downward, i.e., toward the ground, which is opposite to an occupant in the electric vehicle, thereby relatively improving the safety of the electric vehicle.

A cooling plate 200 may be located adjacent to the cell unit 100 including the plurality of battery cells 10 to perform cooling or fire-extinguishing for the plurality of battery cells 10.

The cooling plate 200 may store cooling liquid inside. The cooling plate 200 may perform cooling for the plurality of battery cells 10 by transferring heat generated by the plurality of battery cells 10 to outside using the cooling liquid.

The cooling plate 200 may be located at one side of the plurality of battery cells 10. According to some embodiments, the cooling plate 200 may be arranged to oppose surfaces of the plurality of battery cells 10 where the vents 13 are formed. In case that heat is generated in the plurality of battery cells 10, the heat may be transferred to the cooling plate 200 located adjacent to the plurality of battery cells 10. The cooling plate 200 may transfer the received heat to the outside of the battery module 1, thereby cooling the plurality of battery cells 10.

The cooling plate 200 may store fire-extinguishing liquid inside. For example, in case that the cooling plate 200 satisfies a certain temperature condition, the stored fire-extinguishing liquid may flow toward the plurality of battery cells 10, thereby performing fire-extinguishing for the plurality of battery cells 10. The fire-extinguishing liquid may be a fire-extinguishing liquid that may be generally used by those skilled in the art, and a detailed description thereof will be omitted.

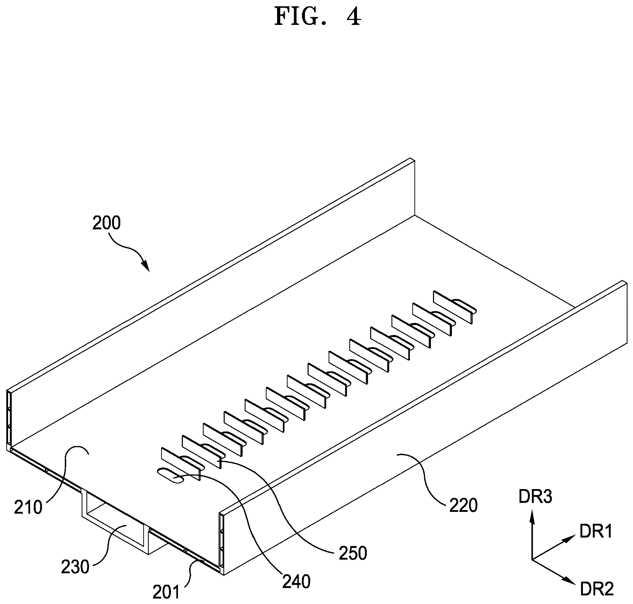

FIG. 4 is a schematic perspective view of an example of the cooling plate 200 according to the disclosure. The cooling plate 200 will be described in more detail with reference to FIG. 4.

The cooling plate 200 may include a cooling passage 201 extending along a direction in which the plurality of battery cells 10 are arranged.

The cooling passage 201 may perform a heat dissipation function by guiding cooling liquid or a fire-extinguishing liquid, stored inside the cooling plate 200, to flow along the direction in which the plurality of battery cells 10 are arranged.

According to some embodiments, the cooling plate 200 may include a vent gas passage 230 arranged to correspond to the vents 13 of the battery cells 10.

Vent gas and other substances generated due to thermal runaway of one battery cell 10 may be quickly discharged to the outside of the battery module 1 through the vent gas passage 230, thereby suppressing heat and strong pressure from being transmitted to other adjacent battery cells 10.

In this instance, the vent gas passage 230 may be located adjacent to the cooling passage 201 formed in the cooling plate 200, and high-temperature vent gas and other substances discharged through the vent gas passage 230 may be quickly cooled, thereby relatively improving the stability of the battery module 1.

The cooling plate 200 may include a main surface 210 in which the cooling passage 201 is formed and which is arranged to correspond to the surfaces of the battery cells 10 with the vents 13. Accordingly, heat discharged through the vents 13 of the battery cells 10 may be cooled. In addition, the main surface 210 of the cooling plate 200 may be a surface including the vent gas passage 230, and may perform a function of rapidly lowering the temperatures of vent gas and other substances discharged into the vent gas passage 230 through the cooling passage 201 formed in the main surface 210.

The cooling plate 200 may further include wing surfaces 220 bent and extending from the main surface 210. The wing surfaces 220 may be arranged to correspond to other surfaces, for example, outer surfaces of the plurality of battery cells 10, for example, opposite side surfaces in a direction (e.g., a second direction DR2) perpendicular to the direction in which the plurality of battery cells 10 are arranged. This may increase a surface area of the cooling plate 200 in contact with the cell unit 100, thereby relatively improving the cooling effect for the battery module 1.

Referring again to FIG. 2, the battery module 1 may further include a thermal interface material (TIM) layer 300 arranged between the plurality of battery cells 10 and the cooling plate 200. The TIM layer 300 may facilitate the transfer of heat generated from the battery cells 10 to the cooling plate 200, thereby relatively improving the cooling function for the battery module 1.

In this instance, the TIM layer 300 may include a shape which is open to correspond to each vent 13. This structure may suppress in advance the interference with the discharge of the vent gas and other substances, which are discharged through the vents 13 during thermal runaway, into the vent gas passage 230.

The cooling plate 200 may include openings corresponding to the respective vents 13 and may further include blocking layers 240 which block the openings.

The opening formed through the cooling plate 200 may facilitate the discharge of vent gas and other substances from the corresponding vent 13 into the vent gas passage 230 upon the occurrence of thermal runaway of the battery cell 10.

According to some embodiments, the shape shown in the drawing is illustrative, and the shape of the opening may not have to be circular, and any shape may be adopted as long as it may be arranged to correspond to the vent 13.

The blocking layer 240 may block the corresponding opening to suppress the propagation of vent gas and other substances to other battery cells 10 where thermal runaway has not occurred even though the vent gas and other substances are emitted due to thermal runaway of an adjacent battery cell 10.

According to some embodiments, the blocking layer 240 that blocks the opening corresponding to the vent 13 of the battery cell 10, in which thermal runaway has occurred, may melt at least in part in case that the temperature of the blocking layer 240 exceeds a certain temperature due to ignition or heat generation of the corresponding battery cell 10. For example, the blocking layer 240 may include any one material with a low melting point, of acrylonitrile butadiene styrene (ABS) resin, polypropylene (PP), polycarbonate (PC), polyethylene (PE), and polytetrafluoroethylene (PFA). Accordingly, the blocking layer 240 may open the opening by melting at a temperature ranging from 80°C to 250°C, such that the vent gas and other substances generated in the battery cell 10 where thermal runaway has occurred may be rapidly discharged into the vent gas passage 230 or to the outside of the battery module 1.

The blocking layer 240 may have a thickness of 0.3 mm or less and may be broken by strong pressure which is applied when the vent gas is emitted due to thermal runaway of the battery cell 10. In this instance, the blocking layer 240 may include an aluminum (Al) material, but is not limited thereto.

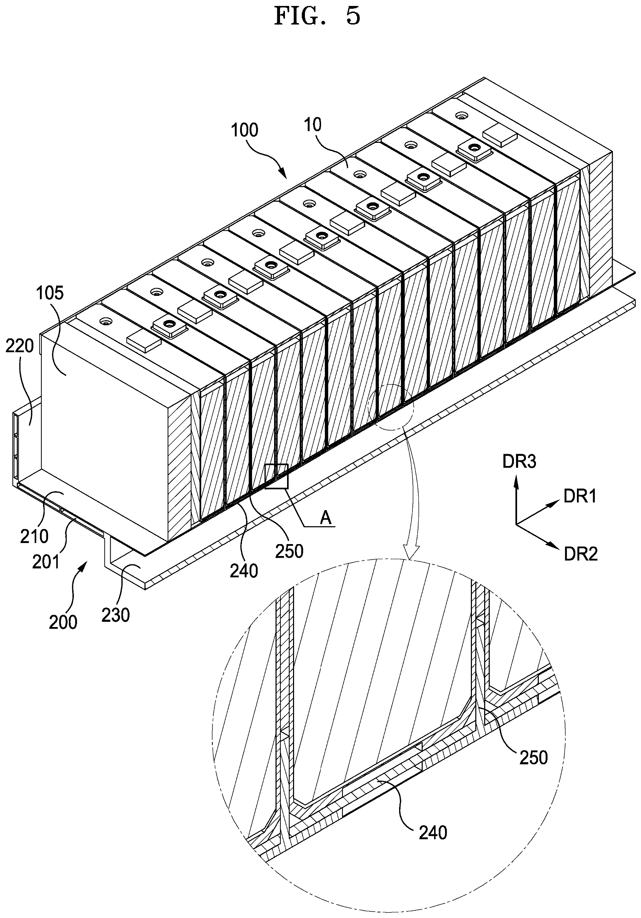

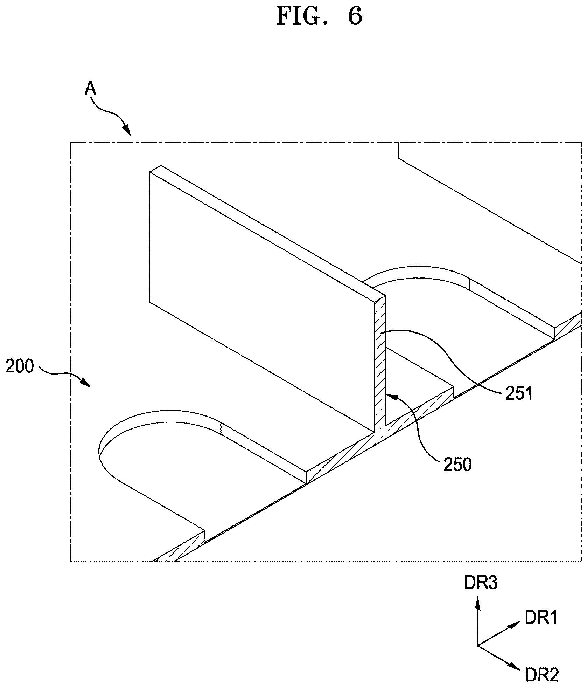

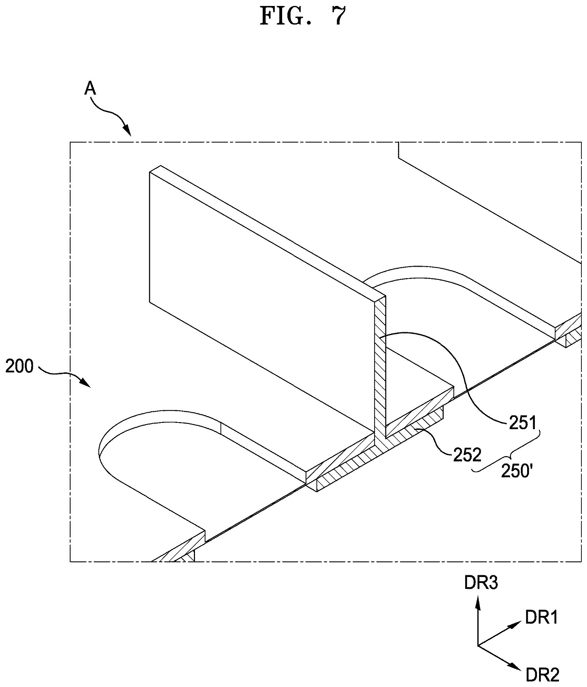

FIG. 5 is a schematic perspective view showing an example of a cross-seciton of the battery module 1 according to the disclosure. FIG. 6 is a schematic perspective view of an example of a stopper 250 according to the disclosure, for example, FIG. 6 is an enlarged view of portion A in FIG. 5, and FIG. 7 is a schematic perspective view of another example of the stopper 250 according to the disclosure, for example, FIG. 7 is another enlarged view of portion A in Fig. 5.

Referring to FIGS. 5 and 6, the cooling plate 200 may further include a stopper 250 located between the pair of battery cells 10 adjacent to each other. The stopper 250 may be arranged as a plurality of stoppers between the plurality of battery cells 10 in one direction (e.g., the first direction DR1). According to some embodiments, the stopper 250 may include a support portion 251 arranged between the wide surfaces of the plurality of battery cells 10 opposing each other to support the battery cells 10.

The stopper 250 may be installed to support one side surface of the battery cell 10 to facilitate the alignment of the plurality of battery cells 10 when assembling the battery module 1, and support the battery cells 10 mounted on the cooling plate 200 so that the battery cells 10 are not pushed out by strong pressure upon the occurrence of thermal runaway, thereby relatively improving the structural stability of the battery module 1.

In addition, the stopper 250 may suppress heat transfer and propagation of vent gas and other substances between the plurality of battery cells 10 arranged adjacent to each other, thereby extending the lifespan of the battery module 1 and relatively improving the reliability of the battery module 1.

In this instance, the stopper 250 may be formed such that the support portion 251, as a structure protruding toward a direction (DR3 in FIG. 6) in which the cell unit 100 is arranged, is integrally formed with the cooling plate 200. In this instance, the operation of the cooling liquid of the cooling plate 200 may directly affect the stopper 250, such that the stopper 250 may effectively perform the insulation function between the pair of battery cells 10 arranged adjacently.

Referring to FIG. 7, a stopper 250' may be detachably fastened to the cooling plate 200. In this instance, the stopper 250' may further include a fixing portion 252 extending and protruding from one end of the support portion 251 in another direction (for example, the first direction DR1). The cooling plate 200 may further include a groove corresponding to a width of the support portion 251 in the first direction so that the stopper 250' may be fastened. In case that the stopper 250' is fitted into the groove of the cooling plate 200, the stopper 250' may be caught and fixed to the cooling plate 200 by the fixing portion 252.

In case that the stopper 250' is detachably fastened to the cooling plate 200, only a stopper 250' which is damaged due to heat generated in the battery cells 10, may be replaced, which may facilitate the maintenance of the battery module 1.

In this instance, the stopper 250' may include a material having a different thermal conductivity from that of the cooling plate 200. According to some embodiments, the stopper 250' may include a material having a lower thermal conductivity than that of the cooling plate 200. Accordingly, the degree of heat transfer to the adjacent battery cells 10 may be reduced by the stopper 250' in case that thermal runaway occurs in any one battery cell 10. For example, the stopper 250' may include a mica material having excellent insulation and heat resistance, but this is an example and embodiments are not limited thereto.

The stopper 250 or 250' may have an area of 2% to 30% of each of opposing surfaces between the battery cells 10.

In case that the area of the support portion 251 of the stopper 250 or 250' is 2% or less of the area of each of the opposing surfaces between the battery cells 10, the effect of supporting the battery cells 10 and insulating between the battery cells 10 may be insufficient.

According to some embodiments, in case that the area of the support portion 251 of the stopper 250 or 250' is at least 30% of the area of each of the opposing surfaces between the battery cells 10, it may be advantageous to stably support the battery cells 10 and relatively improve an initial insulation effect between the battery cells 10 upon the occurrence of thermal runaway of the battery cell 10. However, in case that the stopper 250 or 250' is heated due to the thermal runaway of the battery cell 10, the heat transfer to the adjacent battery cells 10 may rather be accelerated. For example, in case that the area of the stopper 250 or 250' is too large, it may deteriorate the space efficiency in the battery module 1 and increase the size and weight of the battery module 1.

Therefore, to effectively suppress the transfer of high temperature and vent gas between the battery cells 10, the stopper 250 or 250' may cover the area ranging from 2% to 30% of each of the opposing surfaces between the battery cells 10.

According to some embodiments, in case of designing the integral stopper 250 by forming the support portion 251 on the cooling plate 200, the opposing area of the stopper 250 with respect to the battery cells 10 may be adjusted by adjusting the length of the support portion 251 (in the second direction DR2 in FIG. 6). According to some embodiments, in case that the stopper 250' is designed to be detachably fastened to the cooling plate 200, there may be a limit to adjusting the length of the support portion 251 involved in the fastening. Therefore, the opposing area of the stopper 250' with respect to the battery cells 10 may be adjusted by adjusting a height of the support portion 251 (in the third direction DR3 in FIG. 7).

According to one or more embodiments, a temperature rise in any battery cell and heat transfer to adjacent battery cells may be suppressed, thereby suppressing in advance thermal runaway from propagating to an entire battery module.

Vent gas and other substances may be discharged while being suppressed from propagating to adjacent battery cells upon an occurrence of thermal runaway of any one battery cell, and temperatures of the discharged vent gas and other substances may be lowered, thereby relatively improving the safety of a battery module.

According to one or more embodiments, a battery module with enhanced durability may be provided by ensuring that battery cells are relatively stably fixed inside the battery module even though strong pressure is generated due to thermal runaway of a battery cell.

In conclusion, according to one or more embodiments, the safety and performance of a battery module may be relatively improved.

However, the characteristics of embodiments according to the present disclosure are not limited to the effects described above, and other technical effects not mentioned will be clearly understood by those skilled in the art from the description of the disclosure described above.

While aspects of some embodiments of the present disclosure have been herein described with regard to a limited number of embodiments and drawings, the disclosure is not limited thereto and it is obvious to those skilled in the art that various modifications and changes may be made thereto within the technical aspects of the present disclosure and the equivalent scope of the appended claims, and their equivalents.

## Claims

1. A battery module comprising:
a plurality of battery cells each comprising a terminal part on one side of the corresponding battery cell, and a vent at an opposite side to the one side; and
a cooling plate comprising a cooling passage extending in a direction in which the plurality of battery cells are located,
wherein the cooling plate comprises a vent gas passage arranged to correspond to the vents of the plurality of battery cells.

2. The battery module as claimed in claim 1, wherein
the cooling plate comprises a main surface arranged to correspond to surfaces, at which the vents are formed, of the plurality of battery cells, and wing surfaces bent and extending from the main surface to correspond to outer surfaces of the plurality of battery cells.

3. The battery module as claimed in claim 1 or claim 2, further comprising
a thermal interface material (TIM) layer between the plurality of battery cells and the cooling plate.

4. The battery module as claimed in claim 3, wherein
the **TIM** layer comprises a shape open to correspond to the respective vents.

5. The battery module as claimed in any one of the preceding claims, wherein
the cooling plate comprises a stopper between a pair of adjacent battery cells.

6. The battery module as claimed in claim 5, wherein
the stopper is detachably fastened to the cooling plate.

7. The battery module as claimed in claim 5 or claim 6, wherein
the stopper has an area in a range of 2% to 30% of each of opposing surfaces between the battery cells.

8. The battery module as claimed in any one of the preceding claims, wherein
the cooling plate comprises openings corresponding to the respective vents, and
the cooling plate further comprises blocking layers configured to block the openings.

9. A battery module comprising:
a plurality of battery cells each comprising a terminal part on one side of the corresponding battery cell, and a vent at an opposite side to the one side; and
a cooling plate comprising a cooling passage extending in a direction in which the plurality of battery cells are located,
wherein the cooling plate comprises a stopper between adjacent cells of the battery cells.

10. The battery module as claimed in claim 9, wherein
the cooling plate comprises a main surface arranged to correspond to surfaces, at which the vents are formed, of the plurality of battery cells, and wing surfaces bent and extending from the main surface to correspond to outer surfaces of the plurality of battery cells.

11. The battery module as claimed in claim 9 or claim 10, further comprising
a thermal interface material (TIM) layer between the plurality of battery cells and the cooling plate.

12. The battery module as claimed in claim 11, wherein
the **TIM** layer comprises a shape open to correspond to the respective vents.

13. The battery module as claimed in any one of claims 9 to 12, wherein
the cooling plate further comprises a vent gas passage arranged to correspond to the vents of the plurality of battery cells.

14. The battery module as claimed in any one of claims 9 to 13, wherein
the stopper has an area in a range of 2% to 30% of each of opposing surfaces between the battery cells.

15. The battery module as claimed in any one of claims 9 to 14, wherein
the cooling plate comprises openings corresponding to the respective vents, and
the cooling plate further comprises blocking layers configured to block the openings.
